# EUROPEAN PATENT APPLICATION

(11) **EP 4 570 581 A1**
(43) Date of publication of application: **18.06.2025**
(21) Application number: 23852307.0
(22) Date of filing: 14.07.2023
(51) Int. Cl.: B60L 58/13, B60L 3/00, B60L 50/60, H02J 7/00

(54) **STORAGE BATTERY SYSTEM, RAIL VEHICLE, DATA SERVER, AND STORAGE BATTERY SYSTEM CONTROL METHOD**

(30) Priority: 09.08.2022 JP 2022127195
(71) Applicant: Hitachi, Ltd., Tokyo 100-8280 (JP)
(72) Inventor: UEDA, Suguru, Tokyo 100-8280 (JP); SAKAGUCHI, Honami, Tokyo 100-8280 (JP); SHINOMIYA, Takeshi, Tokyo 100-8280 (JP); TAKAHASHI, Chiaki, Tokyo 100-8280 (JP); NAITO, Shunya, Tokyo 100-8280 (JP); MARUKO, Takuya, Tokyo 100-8280 (JP)
(74) Representative: MERH-IP Matias Erny Reichl Hoffmann Patentanwälte PartG mbB
(86) International application number: PCT/JP2023/026008
(87) International publication number: WO 2024/034326

(57) **Abstract**

The purpose of the present invention is to provide a technique that makes it possible to use a storage battery stably for a long time while preventing running out of electricity and appropriately keeping a train schedule. In order to achieve this purpose, the storage battery system according to the present invention comprises: a running-out-of-electricity occurrence prediction unit that predicts, at a time point until the starting time of a rail vehicle, the occurrence of running out of electricity on the basis of storage battery information, meteorological information, and vehicle operation information; and an SOC control condition determination unit that determines the SOC control condition of a storage battery on the basis of the prediction result of the running-out-of-electricity occurrence prediction unit. The SOC control condition determination unit also controls the SOC at the starting time and the upper limit SOC of the storage battery.

## Description

### Technical Field

The present invention relates to a storage battery system, a rail vehicle, a data server, and a storage battery system control method.

### Background Art

To prevent global warming, the emission amount of a carbon dioxide gas has been required to be reduced, and for example, an automobile that uses a gasoline engine as one of major carbon dioxide gas emission sources has been increasingly replaced with a hybrid electric automobile, an electric automobile, and the like. Here, as a storage battery (secondary battery) that enables charging and discharging, there are a lithium-ion rechargeable battery, a nickel hydrogen battery, a lead battery, an electric double layer capacitor, and the like. In particular, a secondary battery system including a plurality of high output density battery cells, such as, among these, the lithium-ion batteries has been widely used for industrial application, and the secondary battery system for vehicle having higher voltage and larger capacity has been started to be widespread in recent years.

In addition, also in the rail vehicle field, the secondary battery system has been widely used to save energy. In particular, to reduce the environment load of a rail vehicle that travels in a non-electrification section without an overhead contact line, a battery powered electric railcar equipped with the secondary battery system has been started to be widespread in recent years.

In an electrification section with the overhead contact line, the battery powered electric railcar travels by using, as a power supply, the power of the overhead contact line, but in the non-electrification section without the overhead contact line, the battery powered electric railcar travels by using, as a power supply, the secondary battery system. For that, the large secondary battery system that is typified by the power supply for the motive power of the battery powered electric railcar is required to have high voltage and high output, so that the secondary battery system is typically configured by connecting a plurality of battery cells in series-parallel manner, and in many cases, the lithium-ion battery is often used for each battery cell.

In order for the battery powered electric railcar to travel in the non-electrification section, sufficient power is required to be charged to the storage battery, and when the charging amount of the storage battery is below a certain amount during the traveling of the rail vehicle, the rail vehicle gets into the state of being unable to travel (hereinafter, referred to as running out of electricity). This results in disruption in the operation schedule, and in the worst case, also results in the situation where the vehicle is brought to a standstill in the route between the stations. To prevent the running out of electricity from occurring, the charging rate (hereinafter, referred to as SOC) of the storage battery is required to be held high. However, the typical secondary battery has a characteristic in which the deterioration is likely to progress due to use under the high SOC for a long period. The progression of the deterioration in the secondary battery causes the lowered battery capacity and the increased internal resistance, which gradually lowers the power amount and the output that can be stored in the secondary battery system, so that finally, the secondary battery cannot be used. Consequently, the storage batteries in which the deterioration has progressed are required to be replaced, but the replacement of these results in large cost.

As described above, for operating the rail vehicle, the prevention of the running out of electricity and the prevention of the deterioration in the storage battery are important problems. As an easy method for achieving both of these, the occurrence period of the running out of electricity is previously predicted to use the storage battery at the high SOC only at that timing. Such control can secure the charging amount necessary for the prevention of the running out of electricity while minimizing the period in which the storage battery is used at the high SOC. Note that on the actual control, since the amount of charging to the storage battery is controlled on the basis of the SOC of the storage battery, it is important to set an appropriate SOC target value (hereinafter, referred to as a target SOC) based on the prediction of the occurrence of the running out of electricity.

For example, Patent Literature 1 discloses a control method by which a necessary vehicle output plan for the case where a vehicle travels in a route is created from operation time data, route data, and freight transport plan data, a route section in which the vehicle cannot travel by only the output of an internal combustion engine is identified on the basis of the necessary vehicle output plan data, the map of a dischargeable power amount corresponding to the SOC of a storage battery is referred, an SOC target value achieving the dischargeable power amount of the storage battery is calculated, and a time to start the charging of the storage battery is determined on the basis of the target SOC.

### Citation List

### Patent Literature

Patent Literature 1: Japanese Unexamined Patent Application Publication No. 2019-38327

### Summary of Invention

### Technical Problem

Patent Literature 1 proposes the method by which the charging start limited time t0 of the battery is calculated, and the charging is started earlier than the charging start limited time t0, so that the SOC of the battery is equal to or more than the target SOC. However, since in the case of the battery powered electric railcar, the charging timing of the storage battery is previously determined, the target SOC calculation method disclosed in Patent Literature 1 is not applicable. Besides, in Patent Literature 1, since in the case of determining the target SOC, the information on the deterioration state of the storage battery and meteorological information are not used, the charging amount necessary for the traveling of the vehicle cannot be precisely estimated. Hereinbelow, the details of these reasons will be described.

First, the reason why in the control of the charging rate of the battery using the charging start limited time t0 (charging timing) disclosed in Patent Literature 1, it is difficult to achieve the target SOC of the battery powered electric railcar will be described. In the case of the battery powered electric railcar, charging equipment for charging the storage battery is provided at each station in which the battery powered electric railcar stops (hereinafter, referred to as a charging station), and the storage battery is charged during stopping at each station, so that the charging amount of the storage battery is recovered to the state where the battery powered electric railcar can travel between the stations. The charging amount of the storage battery at the charging station is proportional to the charging time of the storage battery and the charging current value at that time. However, the staying time at the charging station is previously set according to the operation schedule of the vehicle. Consequently, when the charging time at the charging station is extended so as to be able to achieve the target SOC, the disruption in the operation schedule is caused, so that the method of Patent Literature 1 is not appropriate.

As another method by which the charging amount of the storage battery is increased while the staying time at the charging station is held constant, it is effective to increase the charging current value at the charging station. However, the upper limit value of the charging current value that can be applied to the storage battery is limited due to the characteristic of the storage battery. Since the charging current value at the charging station is set to the value near such the upper limit value, the method for improving the charging current value is also less effective.

Subsequently, the reason why the method of Patent Literature 1 cannot appropriately predict the charging amount necessary for the traveling of the vehicle will be described. In Patent Literature 1, the necessary vehicle output plan data is created from the operation time data, the route data, and the freight transport plan data, and the necessary vehicle output plan data is used to calculate the charging power amount required by the battery. However, the charging amount necessary for the traveling of the vehicle typically includes the power of an auxiliary device, such as an air conditioner. In addition, a snow-resistant brake is used during snowfall or when an outside temperature is below the certain value, the power amount necessary for the traveling of the vehicle is increased. Besides, it is known that when the outside temperature is low, the resistance of the storage battery is increased, so that the scheduled charging amount cannot be charged at the charging station.

In this way, depending on the meteorological condition and the environment temperature, the charging amount necessary for the traveling in the route section and the target SOC value at departing from the charging station are changed. In particular, in winter in which the outside temperature is low, the charging amount necessary for traveling in the route section is increased, and the SOC at departing from the charging station is also lowered, so that the running out of charging amount (running out of electricity) during travelling is likely to occur. For that, to set the target SOC so as to be able to prevent the running out of electricity, it is necessary to consider the meteorological information.

Besides, it is known that the power amount that can be stored in the storage battery depends also on the deterioration state of the storage battery. When the storage battery is used for a long period to progress the deterioration in the capacity, the total amount of the power amount that can be stored in the storage battery is also lowered. For that, unless the deterioration state of the storage battery is also taken into consideration, the charging amount necessary for fully travelling in the route section cannot be estimated. From the above, to prevent the running out of electricity, it is necessary to set the target SOC in which the meteorological information and the deterioration state of the storage battery are taken into consideration.

As described above, to achieve both of the prevention of the running out of electricity of the battery powered electric railcar and the suppression of the deterioration of the storage battery, it is necessary to take at least two of the meteorological information and the deterioration state of the storage battery into consideration to predict the occurrence timing of the running out of electricity and the magnitude of the charging amount that is lacking at that time. Besides, since the charging amount at the charging station has the upper limit, it is effective to increase the SOC (initial SOC) at the first departure time in the period in which the occurrence of the running out of electricity is predicted. As the reason for changing the initial SOC, since the operation schedule is not limited at the point of time before the first departure time, the charging time of the storage battery can be taken sufficiently long. Note that as the method for determining the SOC at this time, it is necessary to set the target SOC at the first departure time so as to compensate for the lack of the charging amount at the occurrence of the running out of electricity. In addition, since the SOC upper limit value (upper limit SOC) at using the storage battery is typically set onto the control system of the storage battery, it is also necessary to change the upper limit SOC according to the change in the initial SOC.

The present invention has been made in consideration of the above points, and an object of the present invention is to provide a technique that makes it possible to use a storage battery stably for a long period while preventing running out of electricity and appropriately keeping a train schedule.

### Solution to Problem

To solve the above problems, one of representative storage battery systems of the present invention includes a running-out-of-electricity occurrence prediction unit predicting, at the point of time until the first departure time of a rail vehicle, the occurrence of running out of electricity on the basis of storage battery information, meteorological information, and vehicle operation information, and an SOC control condition determination unit determining the SOC control condition of a storage battery on the basis of the prediction result of the running-out-of-electricity occurrence prediction unit.

### Advantageous Effects of Invention

According to the present invention, provided is the technique that makes it possible to use a storage battery stably for a long period while preventing running out of electricity and appropriately keeping a train schedule.

Problems, configurations, and effects other than the above will be apparent from the description of the following embodiment of the present invention.

### Brief Description of Drawings

Fig. 1 is a system configuration diagram illustrating a storage battery system of the present embodiment.
Fig. 2 is a diagram illustrating an example of the prediction result of the charging and discharging pattern calculated in the storage battery system of the present embodiment.
Fig. 3 is a diagram illustrating an example of the prediction result of the charging and discharging pattern calculated in the storage battery system of the present embodiment.
Fig. 4 is a diagram illustrating the processing flow of the storage battery system of the present embodiment.
Fig. 5 is a diagram illustrating an example of the case of changing the SOC at the first departure time at the station and the SOC upper limit value on the control of the storage battery in the storage battery system of the present embodiment.
Fig. 6 is a diagram illustrating an example of the case of changing the SOC at the first departure time at the station, the SOC upper limit value on the control of the storage battery, and the charging target SOC at the charging station in the storage battery system of the present embodiment.

### Description of Embodiments

Hereinbelow, an embodiment of the present invention will be described in detail with reference to the drawings and the like. The following description exemplifies the specific examples of the contents of the present invention, the present invention is not limited to the description of these, and various changes and modifications can be made by those skilled in the art within the scope of the technical idea disclosed in the present specification. In addition, in all of the drawings for describing the present embodiment, those having the same functions are indicated by the same reference numerals, and the repeated description thereof may be omitted. In addition, hereinafter, a storage battery may be abbreviated as a "secondary battery" or simply as a "battery". In addition, a rail vehicle that travels by power suppled from the storage battery of a battery powered electric railcar and the like is abbreviated simply as a "rail vehicle".

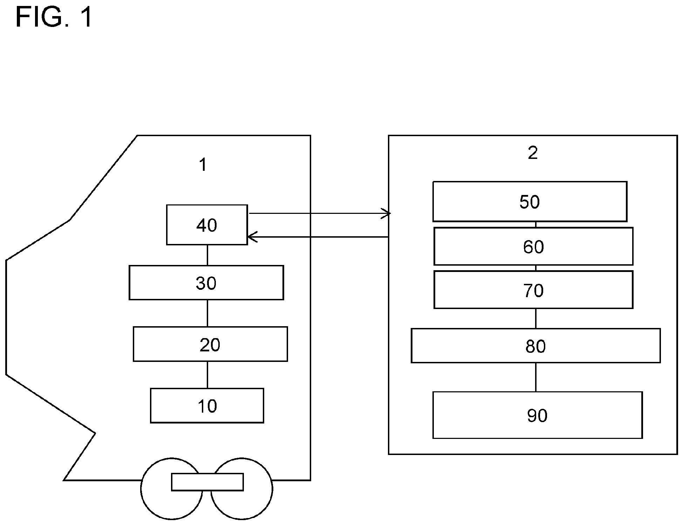

Fig. 1 is a system configuration diagram illustrating a storage battery system of the present embodiment. In the drawing, the storage battery system includes a rail vehicle 1 and a data server 2. The rail vehicle 1 includes a storage battery 10, a storage battery control device 20 controlling the storage battery, a data acquiring unit 30 acquiring vehicle operation information and storage battery information from the storage battery control device, and a communication device 40 connected with the data acquiring unit 30 and transmitting and receiving data between the communication device 40 and the data server 2 (for example, transmitting the storage battery information and receiving a target SOC and an upper limit SOC).

The data server 2 includes a storage battery information accumulation unit 50 accumulating the storage battery information, a meteorological information acquiring unit 60 acquiring meteorological information on the operation day of the rail vehicle 1, a schedule information recording unit 70 recording the vehicle operation information of the rail vehicle 1, a running-out-of-electricity occurrence prediction unit 80 predicting the occurrence of running out of electricity on the rail operation day on the basis of the information of the storage battery information accumulation unit 50, the meteorological information acquiring unit 60, and the schedule information recording unit 70, and an SOC control condition determination unit 90 determining the SOC control condition of the storage battery 10 on the basis of the prediction result of the running-out-of-electricity occurrence prediction unit 80.

The storage battery 10 can serve to store and supply power necessary for the traveling of the rail vehicle 1 such as the battery powered electric railcar.

The storage battery control device 20 can acquire the storage battery information from the storage battery 10, and control the electric current, the voltage, the charging rate, and the like of the storage battery 10 on the basis of the storage battery information. Note that the storage battery information means at least the electric current or the voltage, and the temperature or the atmospheric temperature, but may include, in addition to these, the power, the charging rate, the capacity maintaining rate, and the resistance increasing rate. In addition, the storage battery information may include, as ones related to the amount of air exposed to the storage battery 10, the vehicle speed, the rotor frequency (of the motor driving the rail vehicle 1), and the cooling conduction ratio (the driving rate of the fan for cooling the storage battery 10).

The data acquiring unit 30 can acquire the vehicle operation information and the storage battery information from the storage battery control device 20. Here, the vehicle operation information means at least the operation schedule during the operation of the vehicle, but preferably includes, in addition to this, the information on the riding rate, the volumes of entrainment, and the vehicle weight of the rail vehicle 1. In addition, the vehicle operation information may include vehicle position information.

The communication device 40 can transmit various information acquired by the data acquiring unit 30 to the data server 2. As a method for transmitting various information to the data server 2, a close proximity wireless (wireless LAN) method, an LTE line method, or the like at a station may be used, and various information may be transmitted via a communication cable such as a LAN cable. In addition, as the communication device 40, the communication device of the storage battery system may be used, and the communication device of a TCMS (vehicle information control device) may be used.

The storage battery information accumulation unit 50 of the data server 2 can accumulate the storage battery information transmitted from the communication device 40.

The meteorological information acquiring unit 60 of the data server 2 can acquire the meteorological information on the operation day of the rail vehicle 1. Here, the meteorological information is required to include atmospheric temperature forecast information in the region in which the railway route is installed, and the meteorological information acquiring unit 60 is required to be able to acquire the lowest atmospheric temperature in the time zone to which the operation schedule of the rail vehicle 1 is set. In addition, the meteorological information preferably includes weather forecast information, such as snowfall and rainfall. Besides this, the meteorological information may include a humidity and a cloud amount.

The schedule information recording unit 70 of the data server 2 can record the vehicle operation information transmitted from the communication device 40. The schedule information recording unit 70 may record the previously created operation schedule of the rail vehicle 1.

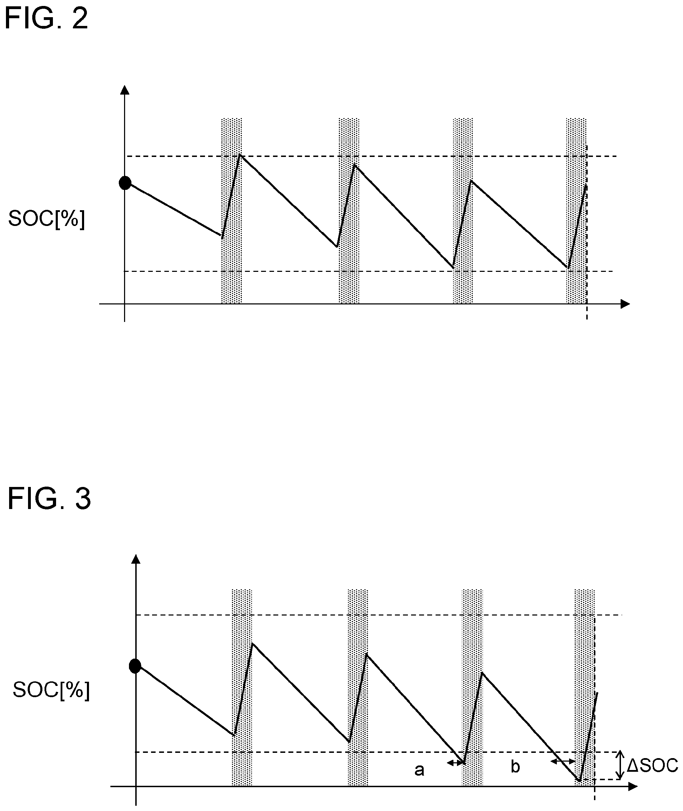

The running-out-of-electricity occurrence prediction unit 80 can use various information accumulated in the storage battery information accumulation unit 50, the meteorological information acquiring unit 60, and the schedule information recording unit 70 to predict a charging and discharging pattern at the point of time from the start of the service operation by the rail vehicle 1 to the end of the operation until immediately before the point of time at which the rail vehicle 1 starts the service operation (the first departure time). The charging and discharging pattern represents the change in the charging rate (SOC) of the storage battery 10 with time. Each of Figs. 2 and 3 is a diagram illustrating an example of the prediction result of the charging and discharging pattern calculated in the storage battery system of the present embodiment. (The vertical axis indicates the SOC[%], the upper dashed line indicates the upper limit value, the lower dashed line indicates the lower limit threshold value, and the solid black circle indicates the initial SOC. The horizontal axis indicates the vehicle operation time, the left end indicates the first departure time, the right dashed line indicates the service end time, the hatched portion indicates the charging time at the charging station, and the non-hatched portion indicates the vehicle traveling time.) In the predicted charging and discharging pattern, when as illustrated in Fig. 3, the SOC minimum value is below the previously set lower limit threshold value, it is judged that the running out of electricity (a and b) has occurred in the charging and discharging pattern, so that the routine goes to the process to the SOC control condition determination unit 90. On the other hand, when as illustrated in Fig. 2, the SOC minimum value is not below the lower limit threshold value, the process on the data server 2 is ended. Note that a series of calculations in the running-out-of-electricity occurrence prediction unit 80 is required to be performed each day in which the rail vehicle 1 is used for the service operation.

When the occurrence of the running out of electricity is predicted by the running-out-of-electricity occurrence prediction unit 80, the SOC control condition determination unit 90 predicts a plurality of charging and discharging patterns for the case of changing the SOC value at the first departure time (initial SOC) and the SOC upper limit value (upper limit SOC) defined by the storage battery control device 20, and outputs the initial SOC value and the upper limit SOC value that can avoid the occurrence of the running out of electricity. The outputted initial SOC value and the outputted upper limit SOC value are reflected onto the control condition of the storage battery 10 in the storage battery control device 20. As a method for reflecting the outputted initial SOC value and the outputted upper limit SOC value onto the storage battery control device 20, the output result of the SOC control condition determination unit 90 may be transmitted to the rail vehicle 1 via the communication device 40 to change the control condition of the storage battery control device 20. As another method, the control condition of the storage battery control device 20 may be manually changed on the basis of the output result of the SOC control condition determination unit 90.

An example of a method for calculating the initial SOC and the upper limit SOC that can avoid the occurrence of the running out of electricity will be described. First, on the basis of the charging and discharging pattern from the first departure time to the service operation end time as illustrated in Fig. 3, the difference between the SOC minimum value and the SOC lower limit threshold value in the charging and discharging pattern is calculated (hereinafter, referred to as a ΔSOC). Next, the ΔSOC is added to the entire charging and discharging pattern. At this time, when the SOC maximum value in the charging and discharging pattern is equal to or less than 100%, the initial SOC added with the ΔSOC is outputted as the initial SOC that can avoid the occurrence of the running out of electricity, and the SOC maximum value in the charging and discharging pattern is outputted as the upper limit SOC that can avoid the occurrence of the running out of electricity.

On the other hand, when the solution in which the SOC maximum value in the charging and discharging pattern is equal to or less than 100% cannot be calculated, the initial SOC and the upper limit SOC are set such that the maximum SOC (SOC maximum value) in the charging and discharging pattern matches 100%, and the SOC charging target value (target SOC) at each charging station is increased. At this time, the target SOC is calculated such that the SOC minimum value in the charging and discharging pattern is equal to or more than the SOC lower limit threshold value, and the initial SOC, the upper limit SOC, and the target SOC that are calculated above are outputted.

The above series of processes is required to be performed on each operation day of the rail vehicle 1. In particular, when the above processes change any one or more of the initial SOC, the upper limit SOC, and the target SOC on the particular day, the changed initial SOC value, the changed upper limit SOC value, and the changed target SOC value are required to be returned to the unchanged initial SOC value, the unchanged upper limit SOC value, and the unchanged target SOC value at the point of time at which the service operation of the rail vehicle 1 on the particular day is ended.

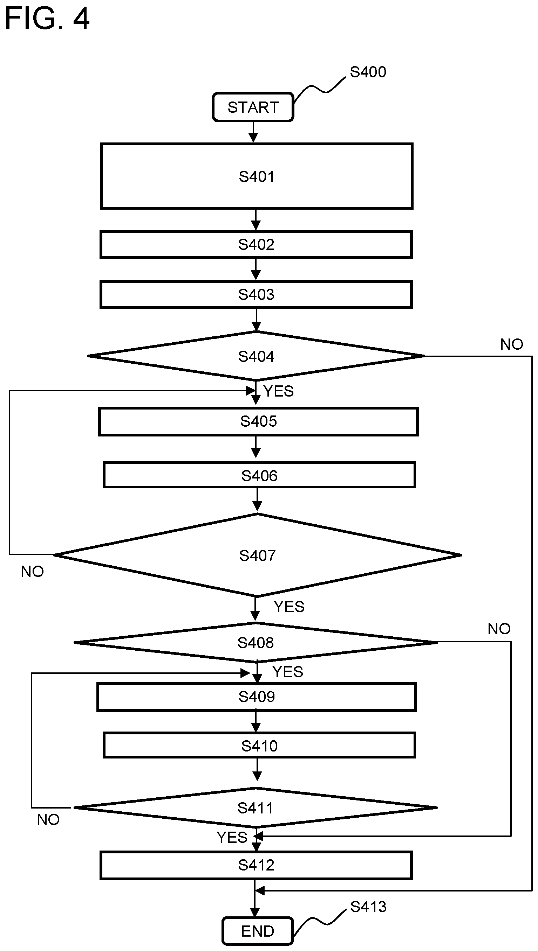

Fig. 4 is a diagram illustrating the processing flow of the storage battery system of the present embodiment. Hereinbelow, the processing flow will be described according to the processing steps.

S400: The control process related to the present embodiment is started.

S401: The storage battery information, the vehicle operation information, and the meteorological information are acquired.

S402: The initial SOC and the upper limit SOC are set on the basis of the control condition of the storage battery control device 20.

S403: The charging and discharging pattern is predicted from various information acquired in S401 and the initial SOC and the upper limit SOC set in S402.

S404: When the minimum SOC (= the SOC minimum value) in the charging and discharging pattern predicted in S403 is less than the previously set SOC lower limit threshold value, the routine goes to S405, and when the minimum SOC is equal to or more than the lower limit threshold value, the routine goes to S413.

S405: The initial SOC value and the upper limit SOC value are arbitrarily changed.

S406: The charging and discharging pattern is predicted from various information acquired in S401 and the initial SOC and the upper limit SOC changed in S405.

S407: When the minimum SOC in the charging and discharging pattern predicted in S406 is equal to or more than the previously set SOC lower limit threshold value and the combination of the initial SOC and the upper limit SOC such that the maximum SOC value in the charging and discharging pattern is the smallest is calculated, the routine goes to S408, and when such the combination of the initial SOC and the upper limit SOC is not calculated, the routine goes to S405.

S408: When the maximum SOC value calculated in S407 is more than 100%, the routine goes to S409, and when the maximum SOC value calculated in S407 is equal to or less than 100%, the routine goes to S412.

S409: The target SOC at charging at the charging station is increased.

S410: The charging and discharging pattern is predicted on the basis of various information acquired in S401, the initial SOC and the upper limit SOC calculated in S407, and the target SOC at charging at the charging station changed in S409.

S411: When the maximum SOC in the charging and discharging pattern predicted in S410 is equal to or less than 100%, the routine goes to S412, and otherwise, the routine goes to S409.

S412: The initial SOC and the upper limit SOC calculated by the above flow are used to change the SOC control condition of the storage battery control device 20. In addition, when the target SOC value at the charging station is required to be changed, the acquired target SOC value is reflected onto the storage battery control device 20 to change the SOC control condition at the charging station.

S413: The control process related to the present embodiment is ended.

Note that the series of processes is required to be performed on each operation day of the rail vehicle 1, and when the SOC control condition is changed by the present processes, the SOC control condition is required to be returned to the unchanged condition at the point of time at which the operation of the rail vehicle 1 is ended.

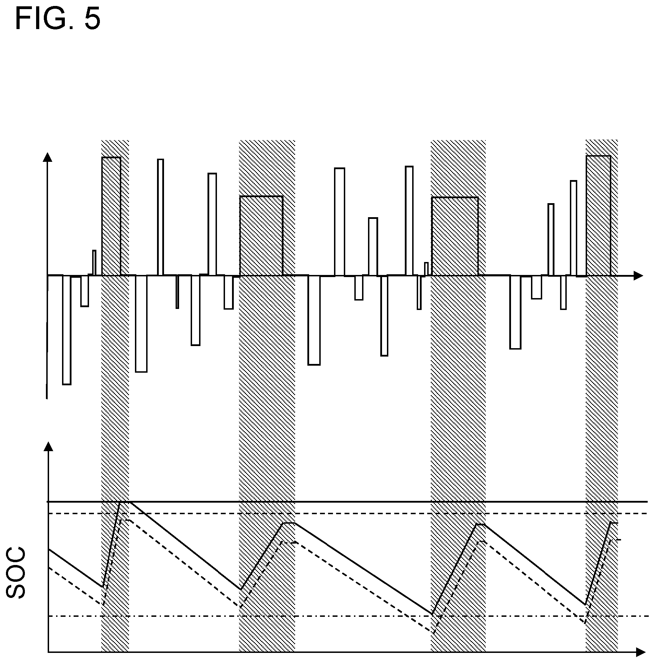

Fig. 5 is a diagram illustrating an example of the case of changing the SOC at the first departure time at the station and the SOC upper limit value on the control of the storage battery in the storage battery system of the present embodiment. (The vertical axis indicates the electric current value in the upper graph, and indicates the SOC in the lower graph, and in the lower graph, the horizontal solid line indicates the changed upper limit value, the horizontal dashed line indicates the unchanged upper limit value, and the long dashed short dashed line indicates the lower limit threshold value. The horizontal axis indicates the time, the left end indicates the first departure time, the right end indicates the service end time, and the hatched portion indicates the charging station staying time. In the lower graph, the polygonal solid line indicates the SOC with control change, and the polygonal dashed line indicates the SOC without control change.) The drawing illustrates the change in the SOC with time predicted with respect to the predetermined operation schedule, and illustrates an example of the avoidance of the running out of electricity by changing the initial SOC and the upper limit SOC. For calculating the change in the SOC with time, the discharging current value to be outputted by the storage battery and the charging current value at the charging station are calculated on the basis of the vehicle speed information necessary for satisfying the operation schedule to calculate the change in the SOC with time on the basis of the acquired charging current value and the acquired discharging current value. In the drawing, the case of changing the initial SOC and the upper limit SOC and the case of not changing the initial SOC and the upper limit SOC are illustrated together. In the case of not changing the initial SOC and the upper limit SOC, the SOC is below the lower limit threshold value, so that the running out of electricity occurs. On the other hand, in the case of changing the SOC control condition, the SOC is equal to or more than the lower limit threshold value from the first departure time to the service end time, so that the running out of electricity can be avoided.

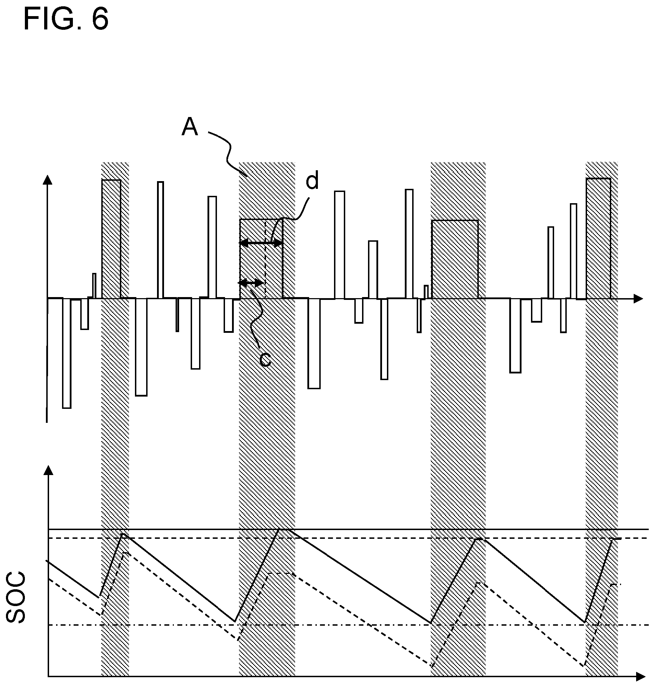

Fig. 6 is a diagram illustrating an example of the case of changing the SOC at the first departure time at the station, the SOC upper limit value on the control of the storage battery, and the charging target SOC at the charging station in the storage battery system of the present embodiment. (The vertical axis indicates the electric current value in the upper graph, and indicates the SOC in the lower graph, and in the lower graph, the horizontal solid line indicates the changed upper limit value, the horizontal dashed line indicates the unchanged upper limit value, and the long dashed short dashed line indicates the lower limit threshold value. The horizontal axis indicates the time, the left end indicates the first departure time, and the right end indicates the service end time. In the lower graph, the polygonal solid line indicates the SOC with control change, and the polygonal dashed line indicates the SOC without control change.) In the drawing, the effect of the case of changing the charging time at, among a total of four charging stations, the second charging station (A in the drawing) is illustrated. (c indicates the unchanged charging time, and d indicates the changed charging time.) When the SOC control condition and the charging time are changed, the SOC is equal to or more than the lower limit threshold value, so that the running out of electricity can be avoided, but when the condition is not changed, the running out of electricity occurs. Note that in the present example, the target SOC at charging is changed only at the second charging station, but the target SOC at charging may be uniformly changed at each charging station, and the target SOC may be increased by targeting some charging stations.

Note that in Figs. 5 and 6, to simplify the understanding, the change in the charging rate at other than the charging station is linearly illustrated.

According to the present embodiment, since the SOC at using the storage battery is changed into the high SOC state only on the service day in which the occurrence of the running out of electricity is predicted, the running out of electricity can be prevented, and besides, the period in which the storage battery is used under the high SOC can be minimized, so that the deterioration in the storage battery can be minimized.

In addition, the SOC control condition determination unit controls the SOC at the first departure time and the upper limit SOC of the storage battery, and can thus perform the effective SOC control.

In addition, the SOC control condition determination unit controls the SOC target value for the case of charging the storage battery at each charging station, and can thus perform the effective SOC control.

In addition, the SOC control condition determination unit controls the SOC target value for the case of charging the storage battery at each charging station to a value different for each charging station, and can thus finely control the SOC target value for the case of charging the storage battery at each charging station.

In addition, the running-out-of-electricity occurrence prediction unit uses, as the meteorological information, the forecast value of an outside temperature during the operation of the rail vehicle and the prediction value of the power consumption of an auxiliary device used under the forecast value of the outside temperature during the operation of the rail vehicle to predict the change in the SOC with time during the operation of the rail vehicle, and can thus predict the change in the SOC with time during the operation of the rail vehicle more precisely.

In addition, the running-out-of-electricity occurrence prediction unit uses, as the meteorological information, the forecast value of a snowfall amount during the operation of the rail vehicle and the prediction value of the power consumption of a snow-resistant brake used under the forecast value of the snowfall amount during the operation of the rail vehicle to predict the change in the SOC with time during the operation of the rail vehicle, and can thus predict the change in the SOC with time during the operation of the rail vehicle more precisely.

Note that the present invention is not limited to the above-described embodiment, and includes various modifications. For example, the above-described embodiment has been described in detail in order to facilitate the understanding of the present invention, and the present invention is not necessarily limited to those including all of the described configurations. In addition, part of the configuration according to the embodiment can be subjected to addition, deletion, and replacement with respect to other configurations.

In addition, the configurations, functions, processing units, processing means, and the like exemplified in the embodiment may be achieved by hardware by designing part or all of them by, for example, an integrated circuit. In addition, the above respective configurations, functions, and the like may be achieved by software with the processor interpreting and executing the program achieving the respective functions. The information on the program, the table, the file, and the like achieving each function can be placed on a recording device, such as a memory, a hard disk, and an SSD (Solid State Drive), or a recording medium, such as an IC card, an SD card, and a DVD.

In addition, any control lines and information lines that are considered to be required for the description are illustrated, and for the product, all the control lines and information lines are not necessarily illustrated. It may be considered that actually, almost all of the configurations are mutually connected.

### List of Reference Signs

1: rail vehicle, 2: data server, 10: storage battery, 20: storage battery control device, 30: data acquiring unit, 40: communication device, 50: storage battery information accumulation unit, 60: meteorological information acquiring unit, 70: schedule information recording unit, 80: running-out-of-electricity occurrence prediction unit, 90: SOC control condition determination unit.

## Claims

1. A storage battery system comprising:
a running-out-of-electricity occurrence prediction unit predicting, at the point of time until the first departure time of a rail vehicle, the occurrence of running out of electricity on the basis of storage battery information, meteorological information, and vehicle operation information; and
an SOC control condition determination unit determining the SOC control condition of a storage battery on the basis of the prediction result of the running-out-of-electricity occurrence prediction unit.

2. The storage battery system according to claim 1,
wherein the SOC control condition determination unit controls the SOC at the first departure time and the upper limit SOC of the storage battery.

3. The storage battery system according to claim 1 or 2,
wherein the SOC control condition determination unit controls the SOC target value for the case of charging the storage battery at each charging station.

4. The storage battery system according to claim 3,
wherein the SOC control condition determination unit controls the SOC target value for the case of charging the storage battery at each charging station to a value different for each charging station.

5. The storage battery system according to any one of claims 1 to 4,
wherein the running-out-of-electricity occurrence prediction unit uses, as the meteorological information, the forecast value of an outside temperature during the operation of the rail vehicle and the prediction value of the power consumption of an auxiliary device used under the forecast value of the outside temperature during the operation of the rail vehicle to predict the change in the SOC with time during the operation of the rail vehicle.

6. The storage battery system according to any one of claims 1 to 5,
wherein the running-out-of-electricity occurrence prediction unit uses, as the meteorological information, the forecast value of a snowfall amount during the operation of the rail vehicle and the prediction value of the power consumption of a snow-resistant brake used under the forecast value of the snowfall amount during the operation of the rail vehicle to predict the change in the SOC with time during the operation of the rail vehicle.

7. The storage battery system according to any one of claims 1 to 6,
wherein the storage battery system includes the rail vehicle and a data server,
the rail vehicle includes:
the storage battery;
a storage battery control device controlling the storage battery;
a data acquiring unit acquiring the vehicle operation information and the storage battery information outputted from the storage battery control device; and
a communication device connected with the data acquiring unit and transmitting and receiving data to and from the data server, and
the data server includes:
a storage battery information accumulation unit accumulating the storage battery information;
a meteorological information acquiring unit acquiring the meteorological information;
a schedule information recording unit recording the vehicle operation information;
the running-out-of-electricity occurrence prediction unit predicting the occurrence of running out of electricity on the basis of the storage battery information of the storage battery information accumulation unit, the meteorological information of the meteorological information acquiring unit, and the vehicle operation information of the schedule information recording unit; and
an SOC control condition determination unit determining the SOC control condition of the storage battery on the basis of the prediction result of the running-out-of-electricity occurrence prediction unit.

8. A rail vehicle comprising:
a storage battery;
a storage battery control device controlling the storage battery;
a data acquiring unit acquiring vehicle operation information and storage battery information outputted from the storage battery control device; and
a communication device connected with the data acquiring unit and transmitting and receiving data to and from a data server.

9. A data server comprising:
a storage battery information accumulation unit accumulating storage battery information;
a meteorological information acquiring unit acquiring meteorological information;
a schedule information recording unit recording vehicle operation information;
a running-out-of-electricity occurrence prediction unit predicting the occurrence of running out of electricity on the basis of the storage battery information of the storage battery information accumulation unit, the meteorological information of the meteorological information acquiring unit, and the vehicle operation information of the schedule information recording unit; and
an SOC control condition determination unit determining the SOC control condition of a storage battery on the basis of the prediction result of the running-out-of-electricity occurrence prediction unit.

10. A storage battery system control method comprising:
at the point of time until the first departure time of a rail vehicle,
predicting the change in the SOC with time on the basis of meteorological information, vehicle operation information, and storage battery information;
predicting the occurrence period of running out of electricity and the lacking charging amount at the occurrence of the running out of electricity from the prediction result of the change in the SOC with time; and
controlling the SOC at the first departure time and the upper limit SOC of a storage battery on the basis of the occurrence period of the running out of electricity and the lacking charging amount at the occurrence of the running out of electricity.
